# NEUE EUROPÄISCHE PATENTSCHRIFT

(11) **EP 1 125 672 B2**
(45) Veröffentlichungstag und Bekanntmachung des Hinweises auf die Entscheidung über den Einspruch: **18.08.2010**
(45) Hinweis auf die Patenterteilung: 26.04.2006
(21) Anmeldenummer: 01102437.9
(22) Anmeldetag: 03.02.2001
(51) Int. Cl.: B23K 26/04, B23K 26/02

(54) **Verfahren und Vorrichtung zum Fügen von Werkstückteilen mittels eines Energiestrahls, insbesondere Laserstrahls**
Method and apparatus for joining workpieces by using a beam of energy, especially a laserbeam
Méthode et dispositif pour assembler des pièces au moyen d'un faisceau d'énergie, notamment un faisceau laser

(30) Priorität: 16.02.2000 DE 10006852
(43) Veröffentlichungstag der Anmeldung: 22.08.2001
(73) Patentinhaber: Anders, Michael, Dr.-Ing., 14055 Berlin (DE)
(72) Erfinder: Haschke, Igor, 10437 Berlin (DE)
(74) Vertreter: Meyer, Hans-Joachim

(56) Entgegenhaltungen:
- EP-A- 0 764 497
- DE-A- 4 412 093
- DE-U1- 297 10 265
- GB-A- 1 2 58 561
- US-A- 5 302 805
- US-A- 5 446 257
- PATENT ABSTRACTS OF JAPAN vol. 2000, no. 02, 29. Februar 2000 (2000-02-29) & JP 11 300485 A (KOBE STEEL LTD), 2. November 1999 (1999-11-02)
- PATENT ABSTRACTS OF JAPAN vol. 017, no. 233 (M-1407), 12. Mai 1993 (1993-05-12) & JP 04 361887 A (MITSUBISHI ELECTRIC CORP), 15. Dezember 1992 (1992-12-15)
- PATENT ABSTRACTS OF JAPAN vol. 015, no. 155 (M-1104), 18. April 1991 (1991-04-18) & JP 03 027886 A (TOSHIBA CORP), 6. Februar 1991 (1991-02-06)
- PATENT ABSTRACTS OF JAPAN vol. 008, no. 016 (M-270), 24. Januar 1984 (1984-01-24) & JP 58 176078 A (HITACHI ZOSEN CORP), 15. Oktober 1983 (1983-10-15)
- PATENT ABSTRACTS OF JAPAN vol. 1995, no. 10, 30. November 1995 (1995-11-30) & JP 07 178555 A (MATSUSHITA ELECTRIC IND CO LTD), 18. Juli 1995 (1995-07-18)
- PATENT ABSTRACTS OF JAPAN vol. 018, no. 380 (M-1639), 18. Juli 1994 (1994-07-18) & JP 06 106372 A (MAZDA MOTOR CORP), 19. April 1994 (1994-04-19)
- PATENT ABSTRACTS OF JAPAN
- DEVELOPMENT OF A PRODUCTION READY AUTOMATED WIRE DELIVERY SYSTEM Nr. NAS8-39933, 30 April 1997,
- DEVELOPMENT OF A PRODUCTION READY AUTOMATED WIRE DELIVERY SYSTEM Nr. NAS8-38477, 09 Juli 1992,

## Beschreibung

Die Erfindung betrifft ein Verfahren zum Fügen von Werkstückteilen mittels eines Energiestrahls, insbesondere Laserstrahls, unter Verwendung eines Zusatzwerkstoffes, der in Form eines Drahtes mittels einer Drahtzuführungseinrichtung zugeführt wird, wobei der Draht als mechanischer Tastelement verwendet und die am Energiestrahl abschmelzende Drahtspitze kraftschlüssig entlang der Werkstrüchkoberfläche geführt wird gemäß dem Oberbegriff des Anspruchs 1 sowie eine entsprechende Vorrichtung gemäß dem Oberbegriff des Anspruchs 9 (siehe, z.B., JP-A-11/300 485).

Das Verbinden von Werkstückteilen durch Laserstrahlschweißen bzw. Laserstrahllöten unter Verwendung von Zusatzdraht gewinnt insbesondere bei der Automobilherstellung zunehmend an Bedeutung. Ein wichtiger Aspekt dieser Fügetechnik ist die genaue Justierung der Position des Zusatzdrahtes relativ zum Laserstrahl. Die Justierung gestaltet sich allerdings relativ schwierig, weil sie sehr genau sein muß, der Arbeitslaserstrahl klein und für das menschliche Auge unsichtbar ist und der Aufbau bekannter Laserstrahlfügevorrichtungen eine Beobachtung des Fügeprozesses erschwert. Die Position des Laserstrahls und des Zusatzdrahtes relativ zu dem zu fügenden Stoß der miteinander zu verbindenden Werkstückteile muß jedoch während der Vorschubbewegung der hierzu eingesetzten Führungsmaschine genau eingehalten werden. Während der Abstand der Laserfokussiereinrichtung zum Stoß bei den üblicherweise verwendeten Strahlgeometrien relativ große Abweichungen toleriert, müssen die seitliche Position des Laserstrahls zum Stoß und der Abstand sowie die seitliche Lage des Zusatzdrahtes zum Stoß während des Fügens entlang des Stoßes genau eingehalten werden.

Bekannt sind Vorrichtungen, die einen geregelten Zusatzdrahtvorschub bei fest eingestellter Drahtzufuhrposition aufweisen.

Ferner sind Vorrichtungen bekannt, die mit Hilfe von Sensoren die Lage des Stoßes der miteinander zu verbindenden Werkstückteile ermitteln und durch Aktoren die Laserfokussiereinrichtung zusammen mit der damit während des Fügeprozesses fest verbundenen Zusatzdrahtzuführeinrichtung nachführen. Eine solche Vorrichtung ist beispielsweise in der DE 44 15 035 C2 beschrieben. Die Lage des Stoßes kann dabei von den Sensoren nur dem Fügeprozeß räumlich vorlaufend ermittelt werden, da der Stoß an der unmittelbaren Schweiß- bzw. Lötstelle nicht mehr erkennbar ist. Derartige Vorrichtungen arbeiten daher trotz ihres aufwendigen Aufbaus relativ ungenau.

Des weiteren sind Vorrichtungen bekannt, bei denen in einem dem Fügen vorgeschalteten Zyklus die gesamte Stoßkontur abgefahren und mit Hilfe von Sensoren die aktuelle Lage der Stoßkontur erfaßt wird, um diese in einem zweiten Arbeitsgang abzufahren und die Werkstückteile dabei zu fügen. Nachteilig ist hier der zusätzliche Zeitbedarf für das vorgeschaltete Abfahren der Stoßkontur und die Tatsache, daß ein thermischer Verzug während des Fügens unberücksichtigt bleiben muß.

Aus der DE 44 12 093 A1 ist eine Vorrichtung zur Steuerung einer Laserschweißmaschine bekannt, die einen reversiblen Zustellmotor für den Fokussierkopf und eine daran befestigte Zuführeinrichtung für einen Zusatzwerkstoff aufweist, wobei zwischen dem Zusatzwerkstoff bzw. seiner Zuführeinrichtung einerseits und dem Werkstück andererseits eine Führungsgrößen-Spannung angelegt ist, deren Abgriff mit zwei parallelen Vergleichern verbunden ist, von denen der eine mit einer Sollwert-Spannung für einen Maximalwert und der andere mit einer Sollwert-Spannung für einen Minimalwert eines Regelbereiches verbunden ist. Beide Vergleicher wirken dabei auf einen Leistungssteller ein, der seinerseits die gewünschte Drehrichtung und den Betrieb des Zustellmotors bestimmt. Der Zusatzwerkstoff kann in beliebiger Form, insbesondere in Form eines Drahtes aus elektrisch leitfähigem Werkstoff vorliegen. Der Draht wird bei dieser Vorrichtung somit auch als Tastelement, und zwar als elektrischer Taster verwandt.

Aus der US 5,302,805 ist eine Lichtbogen-Schweißvorrichtung bekannt. Der Lichtbogen erzeugt am Werkstück ein Schweißbad, an dessen Rand ein Zusatzwerkstoff in Form eines Drahtes zugeführt wird. Der Zusatzdraht (Fülldraht) wird mittels eines automatischen Drahtzuführungsmechanismus über Führungshülsen eines Schweißdraht-Drucksensors zugeführt. Der Schweißdraht-Drucksensor weist ein mit einem Positionsregler verbundenes Basisteil und ein daran über einen Schwenkstift gelagertes Kopfteil auf, wobei in einer Ausnehmung des Basisteils eine Kraftmessdose angeordnet ist, die bei einem Verschwenken des Kopfteils gegenüber dem Basisteil beaufschlagt wird. Der Draht wird gegen die Vorderkante des Schweißbades gedrückt, wobei die Andruckkraft ein Moment um den Schwenkstift erzeugt, das durch die Kraftmessdose erfasst wird. Die elektrischen Signale der Kraftmessdose werden über einen Verstärker dem Positionsregler zugeführt. In Abhängigkeit dieser Signale steuert der Positionsregler die Position der Schweißdraht-Drucksensor-Anordnung, um ein Lösen des Kontaktes zwischen Zusatzdraht und Werkstück zu verhindern.

Die JP-A-11 300485 offenbart ein Laserschweißverfahren zum Fügen von Werkstücken aus Aluminium unter Verwendung eines Zusatzdrahtes aus Aluminium, der mit einem bestimmten Druck auf das zu verschweißende Material gedrückt wird. Eine Nachführung des Laserstrahlfokus in Abstandsrichtung zur Werkstückoberfläche oder eine Nachführung des Laserstrahls und des Zusatzdrahtes in seitlicher Richtung sind in der JP 11 300485 A nicht beschrieben.

Die JP-A04/361887 offenbart eine Laserstrahlschweißvorrichtung mit einer Einrichtung, die den Zusatzdraht nachführt, so dass er in Kontakt zur Werkstückoberfläche bleibt. Hierzu wird ein elektrischer Kontakt verwendet, der von einer Detektoreinrichtung über Anschlüsse an Werkstück und Zusatzdrahthalter überprüft wird. Die Spitze des Zusatzdrahtes wird ständig mit der Werkstückoberfläche in Kontakt gebracht. Gelangt die Spitze des Zusatzdrahtes außer Kontakt mit der Oberfläche der zu verschweißenden Werkstücke, so wird dieser Zustand von der Detektoreinrichtung erfasst und der Zusatzdraht entsprechend nachgeführt, so dass er die Werkstückoberfläche wieder berührt. Der Zusatzdraht wird hier somit nicht als mechanisches Tastelement, sondern als elektrisches Tastelement verwendet. Eine ähnliche Vorrichtung ist aus der oben bereits genannten DE 44 12 093 A1 bekannt.

Die JP-A-03/027886 offenbart eine Laserschweißmaschine zum Herstellen von dreidimensional verlaufenden Schweißnähten unter Verwendung eines Zusatzdrahtes, deren Schweißkopf in drei senkrecht zueinander verlaufenden Richtungen x, y und z verfahrbar und um zwei senkrecht zueinander verlaufende Achsen drehbar ist. Um die Herstellung dreidimensional verlaufender Schweißnähte zu erleichtern, ist die Zusatzdrahtzuführungseinrichtung frei, koaxial zu dem Schweißkopf drehbar. Die Verwendung eines mechanischen Tastelements zur Nachführung des Laserstrahls bzw. des Laserstrahlfokus ist nicht beschrieben.

Schließlich sind Vorrichtungen bekannt, die mittels mechanischer Taster und nachgiebiger Befestigung den Abstand eines Punktes vor, hinter oder neben dem Laserstrahl (bezogen auf den Verlauf der Schweiß- bzw. Lötnaht) zum Werkstück einstellen (vgl. zum Beispiel DE 196 15 069 A1). Derartige Taster unterliegen jedoch einem mechanischen Verschleiß. Außerdem hat hier die Winkellage der Vorrichtung zur Werkstückoberfläche einen erheblichen Einfluß auf die Genauigkeit des Fügeprozesses, da sich der mechanische Taster auf einen Punkt vor, hinter bzw. neben der unmittelbaren Fügestelle abstützt.

Der vorliegenden Erfindung liegt die Aufgabe zugrunde, ein Verfahren sowie eine Vorrichtung der eingangs genannten Art anzugeben, mit denen ein verbessertes Fügeergebnis erzielbar ist.

Diese Aufgabe wird hinsichtlich des Verfahrens durch die Merkmale des Anspruchs 1 und hinsichtlich der Vorrichtung durch die Merkmale des Anspruchs 9 gelöst.

Die Erfindung basiert somit auf der Idee, den Zusatzdraht als mechanisches Tastelement zu benutzen. Im Gegensatz zu den herkömmlichen mechanischen Tastern unterliegt der Zusatzdraht praktisch keinem Verschleiß, da er kontinuierlich an dem Energiestrahl abgeschmolzen wird. Über seine Drahtspitze tastet der Zusatzdraht im Rand der unmittelbaren Schweiß- bzw. Lötstelle die Kontur des von den zu verbindenden Werkstückteilen definierten Stoßes an. Bei dem Energiestrahl handelt es sich vorzugsweise um einen Laserstrahl. Es ist aber auch denkbar, daß die Erfindung beim Elektronenstrahlfügen anwendbar ist.

Wird die Drahtzuführungseinrichtung verschiebbar in Richtung der Achse des Energiestrahls angeordnet und die am Energiestrahl abschmelzende Drahtspitze kraftschlüssig entlang der Werkstückoberfläche geführt, so stellt sich selbsttätig ein Abstand der abschmelzenden Drahtspitze zur Werkstückoberfläche ein, der ein optimales Abschmelzen des Drahtes am Rand des Energiestrahls unter Berührung der Werkstückoberfläche sicherstellt. In seitlicher Richtung bezüglich der herzustellenden Schweiß- oder Lötnaht kann die Nachführung des Drahtes zum Energiestrahl vorzugsweise mittels eines sichtbaren Hilfslaserstrahls (Pilotlaser) erfolgen.

Die Nachführung des Energiestrahls in Abstandsrichtung, das heißt, die Nachführung des Energiestrahlfokus in Richtung der Strahlachse erfolgt nach dem erfindungsgemäßen Verfahren in der Weise, daß die Einrichtung zur Fokussierung des Energiestrahls mit der Drahtzuführungseinrichtung automatisch mitbewegt wird. Dies gleicht den bekannten mechanischen Abtastern, jedoch mit dem Unterschied, daß der Bezugspunkt am Schmelzbadrand liegt, das heißt am Rand der momentanen Schweiß- bzw. Lötstelle.
Die kraftschlüssige Führung der Drahtspitze erfolgt dabei einfach über die Gravitationskraft, eine Feder, pneumatische oder hydraulische Antriebe mit bestimmtem Druck, elektrische Motoren mit bestimmtem Drehmoment oder über Sensoren, insbesondere Kraftmomentensensoren und damit geregelt geführte Aktoren. Die Kraftreglung von Aktoren mit Sensoren, die die Andruckkraft des Drahtes als Tastelement messen, erlaubt die Ausschaltung des Einflusses des Eigengewichts der Drahtzuführungseinrichtung bei einer Veränderung deren Orientierung im Raum.

Vorteilhaft ist es, wenn der Abstand zwischen der Einrichtung zur Fokussierung des Energiestrahls und der Werkstückoberfläche erfaßt wird und der Fügeprozeß bei Überschreitung oder Unterschreitung eines vorgebbaren Abstandes beendet wird. So kann zum Beispiel das Ende einer Schweißnaht an einem Blechende durch eine heftige Abstandsänderung erkannt und der Fügeprozeß sodann beendet werden.

Nach einer weiteren vorteilhaften Ausgestaltung des Verfahrens ist vorgesehen, daß die Andruckkraft der Drahtspitze mit einer Soll-Andruckkraft verglichen wird und der Fügeprozeß bei Überschreitung oder Unterschreitung einer vorgebbaren Soll-Andruckkraft beendet wird. Anhand des Vergleichs der tatsächlichen Andruckkraft der Drahtspitze mit einer Soll-Andruckkraft kann auf eine fehlerhafte Nachführung, übermäßige Werkstücktoleranzen, eine schlechte Stoßvorbereitung, eine mangelnde Leistung des Energiestrahls und/oder eine fehlerhafte Vorschubbewegung der zugehörigen Führungsmaschine geschlossen werden. Damit läßt sich das Auftreten von qualitativ minderwertigen Schweiß- bzw. Lötverbindungen rechtzeitig erkennen und entsprechend korrigieren sowie eine Überlastung der Anlage vermeiden.

Weitere bevorzugte und vorteilhafte Ausgestaltungen des erfindungsgemäßen Verfahrens sowie der entsprechenden Vorrichtung sind in den Unteransprüchen angegeben.

Nachfolgend wird die Erfindung anhand einer mehrere Ausführungsbeispiele darstellenden Zeichnung näher erläutert. Im einzelnen zeigen in schematischer Darstellung:
- Fig. 1: eine Seitenansicht auf eine erfindungsgemäße Vorrichtung im Bereich eines an einem fokussierten Laserstrahl abschmelzenden Zusatzdrahtes,
- Fig. 2: eine Ansicht in Vorschubrichtung einer erfindungsgemäßen Vorrichtung bei der Herstellung einer Bördelnaht, und
- Fig. 3: eine Ansicht in Vorschubrichtung einer erfindungsgemäßen Vorrichtung bei der Herstellung einer Kehlnaht.

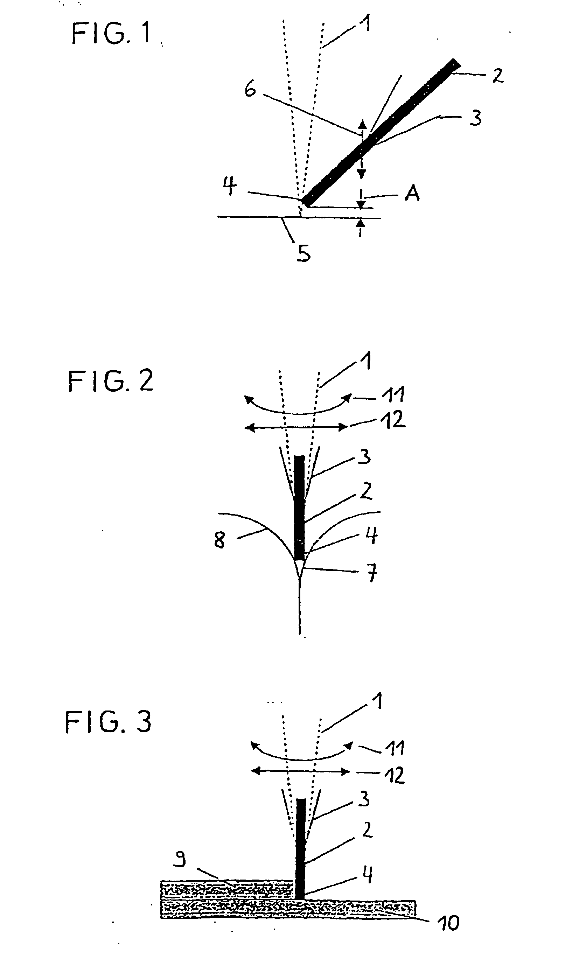

In Fig. 1 ist eine Vorrichtung zum Fügen von Werkstückteilen mittels Laserstrahl schematisch dargestellt. Die Vorrichtung umfaßt eine nicht näher dargestellte Einrichtung zur Fokussierung des Laserstrahls 1 und eine nur teilweise dargestellte Drahtzuführungseinrichtung zur Zuführung eines Zusatzdrahtes 2. Die Fokussierung des Laserstrahls 1 kann beispielsweise mittels einer Fokussierlinse erfolgen. Die Drahtzuführungseinrichtung weist eine Führungsdüse 3 auf. Darüber hinaus umfaßt die Vorrichtung eine nicht dargestellte Einrichtung zur Zuführung von Schutzgas (z.B. Argon, Helium oder Stickstoff).

Die Drahtzuführungseinrichtung ist zumindest im Bereich der Führungsdüse 3 verschiebbar in Richtung der Laserstrahlachse angeordnet, und zwar derart, daß die am fokussierten Laserstrahl 1 abschmelzende Drahtspitze 4 kraftschlüssig entlang der Werkstückoberfläche 5 geführt wird. Die Bewegungsrichtung der Drahtzuführungseinrichtung ist durch den Doppelpfeil 6 angedeutet. Die kraftschlüssige Führung der Drahtspitze 4 kann im einfachsten Fall über die Gravitationskraft erfolgen. Dabei kann sich selbsttätig ein Abstand A zwischen der abschmelzenden Drahtspitze 4 und der Werkstückoberfläche 5 einstellen, dessen Betrag während des Fügens jedoch gegen Null tendiert. In Fig. 1 ist der Abstand A aus Gründen der Veranschaulichung mit einem Betrag größer Null dargestellt. Durch die bewegliche Lagerung der Drahtzuführungseinrichtung während des Fügeprozesses wird ein optimales Abschmelzen des Drahtes 2 am Laserstrahlrand sicherstellt, wobei der Draht 2 über das Schmelzbad die Werkstückoberfläche 5 berührt. Der Draht 2 tastet somit im Rand des Schmelzbades die Kontur des von den zu verbindenden Werkstückteilen definierten Fügestoßes an. Die seitliche Nachführung des Drahtes zum Laserstrahl kann dabei, wie an sich bekannt, mit einem sichtbaren Hilfslaserstrahl (Pilotlaser) erfolgen.

Die kraftschlüssige Führung der Drahtspitze 4 erfolgt alternativ zur bloßen Nutzung der Gravitationskraft über eine Feder oder einen pneumatischen oder hydraulischen Antrieb, der einen bestimmtem Druck auf den Draht 2 ausübt. Auch kann hierzu vorteilhaft ein elektrischer Motor eingesetzt werden, der ein bestimmtes Drehmoment erzeugt. Ferner kann die kraftschlüssige Führung der Drahtspitze 4 auch über KraftmomentenSensoren und damit geregelt geführte Aktoren erfolgen.

Die Nachführung des Laserstrahlfokus in der auf die Werkstückoberfläche 5 bezogenen Normalrichtung erfolgt in der Weise, daß die Fokussiereinrichtung mit fest programmiertem Abstand zur Werkstückoberfläche 5 geführt wird. Es ist aber auch möglich, die Fokussiereinrichtung mit der Drahtzuführungseinrichtung mitzubewegen.

In den Figuren 2 und 3 ist das Fügen von Werkstückteilen 7, 8; 9, 10 in Vorschubrichtung einer erfindungsgemäßen Laserstrahlschweiß- bzw. Laserstrahllötvorrichtung schematisch dargestellt, wobei Fig. 2 die Herstellung einer Bördelnaht und Fig. 3 die Herstellung einer Kehlnaht zeigt. Es ist zu erkennen, daß insbesondere in diesen beiden Fällen die von den miteinander zu verbindenden Werkstückteilen 7, 8; 9, 10 definierte Stoßform auch in seitlicher Richtung eine kraftschlüssige Führung der am Laserstrahlrand abschmelzenden Drahtspitze 4 erlaubt. Unter dieser Voraussetzung können der Laserstrahl 1 und der Zusatzdraht 2 auch synchron und fest miteinander verkoppelt nachgeführt werden. Dies kann in Form einer linearen Verschiebung und/oder einer Drehbewegung erfolgen, wie in den Figuren 2 und 3 durch entsprechende Doppelpfeile 11, 12 angedeutet ist. In Fig. 3 ist zur Veranschaulichung der seitlichen Lageadaption die Drahtspitze 4 beabstandet zum Werkstückteil 9 gezeigt. Tatsächlich ist aber auch dieser Abstand während des Fügens nicht vorhanden, da der Draht 2 kraftschlüssig an der von dem Werkstückteil 9 gebildeten seitlichen Führungsfläche geführt wird.

Die Drehbewegung des Laserstrahls zur seitlichen Lageadaption kann vorzugsweise mittels eines Umlenkspiegels realisiert werden, der um eine Achse quer zur Achse des darauf einfallenden Laserstrahls schwenkbar ist. Eine solche Optik gestattet die Vornahme sehr großer Winkeländerungen während des Fügeprozesses. Dies ist besonders bei der Verwendung von Robotern als Führungsmaschinen für die Vorschubbewegung vorteilhaft, da durch eine entsprechende Verstellung der Optik ungünstige Roboterbewegungen vermieden werden können.

Die erfindungsgemäße Vorrichtung kann darüber hinaus mit analogen oder digitalen Sensoren zur Erfassung der Positionen ihrer beweglichen Einrichtungen sowie mit Sensoren zur Erfassung der Andruckkraft des Zusatzdrahtes 2 ausgerüstet sein. Mit Hilfe dieser Sensoren kann aus einer bezüglich der Werkstückoberfläche und des Stoßverlaufes definierten Position heraus eine kontrollierte, positions- oder geschwindigkeitsgeregelte Suchbewegung begonnen und bei Erreichen vorgebbarer Soll-Andruckkräfte beendet werden. Anschließend kann die Vorschubbewegung der Führungsmaschine und der Fügeprozeß gestartet werden.

Das Nahtende an einem Blechende kann z.B. durch eine heftige Abstandsänderung erkannt und der Fügeprozeß sodann beendet werden.

Wachsen die Positionen oder Kräfte während der Bearbeitung über vorgegebene Grenzen hinaus, kann damit auf eine fehlerhafte Nachführung, übermäßige Werkstücktoleranzen, eine schlechte Stoßvorbereitung, eine mangelnde Laserleistung und/oder eine fehlerhafte Vorschubbewegung der zugehörigen Führungsmaschine geschlossen werden. Auf diese Weise läßt sich frühzeitig das Entstehen von Ausschuß erkennen und eine Überlastung der Anlage vermeiden.

Zum Einrichten der Vorrichtung kann mit Hilfe einfacher mechanischer Anzeigevorrichtungen die momentane Position der Drahtspitze 4 abgelesen und durch Korrektur des Programms der zugehörigen Führungsmaschine in eine bevorzugte Lage bezüglich des feststehenden Teils der Vorrichtung gebracht werden. Hierzu wird zunächst der Draht 2 mit dem Arbeitslaserstrahl 1 abgetrennt, wobei ein kugelförmiges Drahtende entsteht, das genau am Laserstrahlrand liegt. Durch die Kugelform des Drahtendes wird ein Verkratzen der Werkstückoberfläche bei der nachfolgenden Bearbeitung weitestgehend ausgeschlossen. Sodann wird die Soll-Vorschubbahn der Führungsmaschine mit dem Zusatzdraht 2 durch dessen Einpassen in den Stoßquerschnitt ermittelt und durch Eingabe mehrerer Positionsangaben in an sich bekannter Weise programmiert. Das Programmieren der Vorschubbahn wird durch die mit der Drahtspitze ermittelten Positionsdaten wesentlich erleichtert.

Die Erfindung ist nicht auf die vorstehend beschriebenen Ausführungsbeispiele beschränkt. Vielmehr ist eine Anzahl von Varianten denkbar, die auch bei grundsätzlich abweichender Ausführung von dem in den Ansprüchen wiedergegebenen Erfindungsgedanken Gebrauch machen. So ist insbesondere denkbar, daß anstelle eines Laserstrahls gegebenenfalls ein Elektronenstrahl zum Einsatz kommt.

## Patentansprüche

1. Verfahren zum Fügen von Werkstückteilen mittels eines Energiestrahls, insbesondere Laserstrahls, unter Verwendung eines Zusatzwerkstoffes, der in Form eines Drahtes mittels einer Drahtzuführungseinrichtung zugeführt wird, wobei die am Energiestrahl abschmelzende Drahtspitze kraftschlüssig entlang der Werkstückoberfläche geführt wird,
**dadurch gekennzeichnet,dass** auf einer Vorschubbahn einer Führungsmaschine die Kontur eines von den zu verbindenden Werkstückteilen (7, 8; 9, 10) definierten Stoßes über die Drahtspitze im Schmelzbaydrand angetastet wird, wobei der Draht auch als mechanisches Tastelement verwendet und, wobei
a) der Energiestrahl (1) mit einer Einrichtung fokussiert wird, die mit der Drahtzuführungseinrichtung automatisch mitbewegt wird, wobei die Drahtzuführungseinrichtung relativ zu der Einrichtung zur Fokussierung des Energiestrahls bewegbar ist, und wobei der Bezugspunkt für die Nachführung des Energiestrahlfokus am Schmelzbadrand liegt, oder
b) die am Energiestrahl (1) abschmelzende Drahtspitze (4) kraftschlüssig entlang einer seitlichen Führungsfläche des von den zu verbindenden Werkstückteilen (7, 8; 9, 10) gebildeten Verbindungsstoßes geführt wird, wobei der Energiestrahl (1) und die Drahtzuführungseinrichtung miteinander fest verkoppelt durch eine lineare Verschiebung und/oder eine Drehbewegung relativ zur seitlichen Führungsfläche nachgeführt werden.

2. Verfahren nach Anspruch 1,
**dadurch gekennzeichnet , dass** die Andruckkraft der Drahtspitze (4) mit mindestens einem Sensor gemessen und die Lage der Drahtzuführungseinrichtung relativ zur Werkstückoberfläche (5) in Abhängigkeit der gemessenen Andruckkraft automatisch gesteuert wird.

3. Verfahren nach Anspruch 1 oder 2,
**dadurch gekennzeichnet , dass** die kraftschlüssige Führung der Drahtspitze (4) entlang der Werkstückoberfläche (5) über die Gravitationskraft, eine Feder, einen pneumatischen oder hydraulischen Antrieb mit bestimmtem Druck, einen elektrischen Motor mit bestimmtem Drehmoment oder über Sensoren und damit geregelt geführte Aktoren erfolgt.

4. Verfahren nach einem der Ansprüche 1 bis 3,
**dadurch gekennzeichnet , dass** als Drahtzuführungseinrichtung eine relativ zum Energiestrahl (1) bewegliche Drahtzuführungseinrichtung verwendet wird und dass der Draht (2) mittels der Drahtzuführungseinrichtung automatisch geführt wird.

5. Verfahren nach einem der Ansprüche 1 bis 4,
**dadurch gekennzeichnet , dass** der Abstand zwischen der Einrichtung zur Fokussierung des Energiestrahls (I) und der Werkstückoberfläche (5) erfasst wird und der Fügeprozess bei Überschreitung oder Unterschreitung eines vorgebbaren Abstandes beendet wird.

6. Verfahren nach einem der Ansprüche 1 bis 5,
**dadurch gekennzeichnet , dass** die Andruckkraft der Drahtspitze (4) mit einer Soll-Andruckkraft verglichen wird und der Fügeprozess bei Überschreitung oder Unterschreitung einer vorgebbaren Soll-Andruckkraft beendet wird.

7. Verfahren nach einem der Ansprüche 1 bis 6, wobei zur Führung des Energiestrahls und des Drahtes relativ zu den Werkstückteilen eine programmgesteuerte Führungsmaschine verwendet wird,
**dadurch gekennzeichnet , dass** vor dem Fügen die Drahtspitze nacheinander an mehreren Stellen des von den Werkstückteilen definierten Verbindungsstoßes kraftschlüssig positioniert wird, die jeweiligen Positionsdaten der Drahtspitze erfasst werden und anhand der Positionsdaten die Führungsmaschine in einer vorteilhaften Position relativ zu den Werkstückteilen programmiert wird.

8. Verfahren nach einem der Ansprüche 1 bis 7,
**dadurch gekennzeichnet , dass** die Andruckkraft der Drahtspitze (4) mit mindestens einem Sensor gemessen und mit mindestens einem vorgebbaren Wert verglichen wird, und dass die Drahtspitze zur Suche eines von den Werkstückteilen definierten Verbindungsstoßes verwendet wird, wobei aus einer definierten Position heraus mittels analoger oder digitaler Positionsgeber eine kontrollierte Suchbewegung begonnen und bei Erreichen einer vorgebbaren Sollkraft beendet wird.

9. Vorrichtung zum Fügen von Werkstückteilen mittels eines Energiestrahls, insbesondere Laserstrahls, unter Verwendung eines Zusatzwerkstoffes in Form eines Drahtes (2), mit einer Einrichtung zur Zuführung des Drahtes, die in Richtung der Energiestrahlachse beweglich gelagert ist, und mit einer Führungsmaschine,
**dadurch gekennzeichnet, dass** die am Energiestrahl (1) abschmelzende Drahtspitze (4) als mechanisches Tastelement kraftschlüssig entlang der Werkstückoberfläche (5) geführt ist, wobei die kraftschlüssige Führung der Drahtspitze (4) entlang der Werkstückoberfläche (5) über die Gravitationskraft, eine Feder, einen elektrischen, hydraulischen oder pneumatischen Antrieb oder über Sensoren und damit geregelt geführte Aktoren erfolgt, und dass
a) auf einer Vorschubbahn der Führungsmaschine die Drahtzuführungseinrichtung relativ zu einer Einrichtung zur Fokussierung des Energiestrahls (1) bewegbar ist, die zur Nachführung des Energiestrahlfokus in Richtung der Energiestrahlachse mit der Drahtzuführungseinrichtung automatisch mitbewegt wird, wobei der Bezugspunkt für die Nachführung des Energiestrahlfokus am Schmelzbadrand liegt, oder
b) auf einer Vorschubbahn der Führungsmaschine die Einrichtung zur Fokussierung des Energiestrahls und die Drahtzuführungseinrichtung linear verschiebbar und/oder drehbar sind, derart, dass die Drahtspitze (4) als mechanisches Tastelement kraftschlüssig entlang einer seitlichen Führungsfläche eines von den zu verbindenden Werkstückteilen (7, 8; 9, 10) definierten Verbindungsstoßes geführt ist, wobei die Bewegung der Einrichtung zur Fokussierung des Energiestrahls mit der Bewegung der Drahtzuführungseinrichtung fest verkoppelt ist.

10. Vorrichtung nach Anspruch 9,
**dadurch gekennzeichnet, dass** die Drahtzuführungseinrichtung eine Mess- und Regelungseinrichtung aufweist, die die Andruckkraft des Drahtes (2) erfasst und mit einer vorgebbaren Sollkraft vergleicht und die am Energiestrahl (1) abschmelzende Drahtspitze (4) in Abhängigkeit des Unterschiedes zwischen erfasster Andruckkraft und Sollkraft kraftschlüssig entlang der Werkstückoberfläche (5) führt.

11. Vorrichtung nach Anspruch 9 oder 10,
**dadurch gekennzeichnet, dass** der Energiestrahl ein Laserstrahl ist und im Strahlengang des Laserstrahls (1) eine Optik angeordnet ist, die eine lineare Verschiebung und/oder eine abgewinkelte Umlenkung des Energiestrahls (1) gestattet.

12. Vorrichtung nach einem der Ansprüche 9 bis 11,
**dadurch gekennzeichnet, dass** der Energiestrahl ein Laserstrahl ist und im Strahlengang des Laserstrahls (1) mindestens ein beweglich gelagerter Umlenkspiegel und/oder mindestens ein beweglich gelagertes Umlenkprisma angeordnet sind.

13. Vorrichtung nach einem der Ansprüche 9 bis 12,
**dadurch gekennzeichnet, dass** die Einrichtung zur Fokussierung des Energiestrahls und die Drahtzuführungseinrichtung von einer programmgesteuerten Führungsmaschine getragen sind, wobei zumindest der Drahtzuführungseinrichtung analoge oder digitale Positionsgeber zugeordnet sind.

## Claims

1. A method for joining work-pieces by means of an energy beam, in particular a laser beam, using a weld filler which is fed in the form of a wire by means of a wire feeding device, wherein the wire tip melting in the energy beam is guided in a non-positive manner along the work-piece surface,
**characterised in that**, on a feed path of a guidance machine, the contour of a joint defined by the work-pieces (7, 8; 9, 10) to be joined is touched via the wire tip in the edge of the melt pool, wherein the wire is also used as a mechanical scanning element and wherein
a) the energy beam (1) is focused by means of a device which is moved along automatically with the wire feeding device, whereby the wire feeding device is movable relative to the device for focusing the energy beam, and wherein the reference point for the tracking of the energy beam focus lies at the edge of the melt pool, or
b) the wire tip (4) melting in the energy beam (1) is guided in a non-positive manner along a lateral guide surface of the connection joint formed by the work-pieces (7, 8; 9, 10) to be joined, wherein the energy beam (1) and the wire feeding device are guided to follow on, rigidly coupled to one another, by a linear displacement and/or a rotational movement relative to the lateral guide surface.

2. The method according to claim 1,
**characterised in that** the contact pressure force of the wire tip (4) is measured with at least one sensor and the position of the wire feeding device relative to the work-piece surface (5) is controlled automatically in dependence on the measured contact pressure force.

3. The method according to claim 1 or 2,
**characterised in that** the non-positive guidance of the wire tip (4) along the work-piece surface (5) takes place by means of gravitational force, a spring, a pneumatic or hydraulic drive with specific pressure, an electric motor with specific torque or by means of sensors and actors guided in a regulated manner therewith.

4. The method according to any one of claims 1 to 3,
**characterised in that** a wire feeding device mobile relative to the energy beam (1) is used as a wire feeding device and that the wire (2) is guided automatically by means of the wire feeding device.

5. The method according to any one of claims 1 to 4,
**characterised in that** the spacing between the device for the focusing of the energy beam (1) and the work-piece surface (5) is detected and the joining process is ended when a presettable spacing is exceeded or fallen below.

6. The method according to any one of claims 1 to 5,
**characterised in that** the contact pressure force of the wire tip (4) is compared with a reference contact pressure force and the joining process is ended when a presettable reference contact pressure force is exceeded or fallen below.

7. The method according to any one of claims 1 to 6,
wherein a program-controlled guidance machine is used to guide the energy beam and the wire relative to the work-pieces, **characterised in that**, before the joining, the wire tip is positioned successively in a non-positive manner at a plurality of points of the connection joint defined by the work-pieces, the respective positional data of the wire tip are detected and, with the aid of the positional data, the guidance machine is programmed in an advantageous position relative to the work-pieces.

8. The method according to any one of claims 1 to 7,
**characterised in that** the contact pressure force of the wire tip (4) is measured with at least one sensor and compared with at least one presettable value, and that the wire tip is used to seek a connection joint defined by the work-pieces, wherein a controlled search movement is started from a defined position by means of an analog or digital position transmitter and is ended when a presettable reference force is reached.

9. A device for joining work-pieces by means of an energy beam, in particular a laser beam, using a weld filler in the form of a wire (2), with a device for feeding the wire which is mounted mobile in the direction of the energy beam axis, and with a guidance machine, **characterised in that** the wire tip (4) melting in the energy beam (1) is guided as a mechanical scanning element in a non-positive manner along the work-piece surface (5), wherein the non-positive guidance of the wire tip (4) along the work-piece surface (5) takes place by means of gravitational force, a spring, an electrical, hydraulic or pneumatic drive or by the means of sensors and actors guided in a regulated manner therewith, and that,
a) on an advance path of the guidance machine, the wire feeding device is mobile relative to a device for focusing the energy beam (1), which is automatically moved along with the wire feeding device for the tracking of the energy beam focus in the direction of the energy beam axis, wherein the reference point for the tracking of the energy beam focus lies at the edge of the melt pool, or,
b) on an advance path of the guidance machine, the device for focusing the energy beam and the wire feeding device are linearly displaceable and/or rotatable in such a way that the wire tip (4) is guided, as a mechanical scanning element, in a non-positive manner along a lateral guide surface of a connection joint defined by the work-pieces (7, 8; 9, 10) to be joined, wherein the movement of the device for focusing the energy beam is rigidly coupled with the movement of the wire feeding device.

10. The device according to claim 9,
**characterised in that** the wire feeding device has a measuring and control device, which detects the contact pressure force of the wire (2) and compares it with a presettable reference force and guides the wire tip (4) melting in the energy beam (1) in a non-positive manner along the work-piece surface (5) in dependence on the difference between the detected contact pressure force and the reference force.

11. The device according to claim 9 or 10,
**characterised in that** the energy beam is a laser beam and an optical system is disposed in the beam path of the laser beam (1), said optical system permitting a linear displacement and/or an angled deflection of the energy beam (1).

12. The device according to any one of claims 9 to 11,
**characterised in that** the energy beam is a laser beam and at least one movably mounted deflection mirror and/or at least one movably mounted deflection prism are disposed in the beam path of the laser beam (1).

13. The device according to any one of claims 9 to 12,
**characterised in that** the device for focusing the energy beam and the wire feeding device are carried by a program-controlled guidance machine, wherein analog or digital position transmitters are assigned at least to the wire feeding device.

## Revendications

1. Méthode pour assembler d'éléments de pièce usinée au moyen d'un rayon énergétique, notamment d'un rayon laser, en utilisant un métal d'apport qui est alimenté sous forme d'un fil au moyen d'un dispositif d'alimentation de fil, la pointe du fil fondant sous le rayon énergétique étant guidée en friction le long de la surface de la pièce usinée, **caractérisé en ce que**, sur une voie d'avance d'une machine de guidage, le contour d'un joint défini par les éléments de pièce usinée (7, 8 ; 9, 10) à assembler est palpé par la pointe du fil dans le bord du bain de fusion, le fil étant utilisé aussi comme élément de palpage mécanique, et dans lequel
a) le rayon énergétique (1) est focalisé au moyen d'un dispositif qui se déplace automatiquement avec le dispositif d'alimentation de fil, le dispositif d'alimentation de fil étant mobile par rapport au dispositif de focalisation du rayon énergétique et le point de référence pour le guidage du foyer de rayon énergétique se trouvant sur le bord de la bande de fusion ou
b) la pointe du fil (4) fondant sous le rayon énergétique (1) est guidée en friction le long d'une surface de guidage latérale du joint d'assemblage constitué par les éléments de pièce usinée (7, 8 ; 9, 10) à assembler, le rayon énergétique (1) et le dispositif d'alimentation de fil étant guidées par rapport à la surface de guidage latérale tout en étant couplés fixement l'un à l'autre par un déplacement linéaire et/ou un mouvement de rotation.

2. Méthode selon la revendication 1,
**caractérisé en ce que** la force de pression de la pointe du fil (4) est mesurée au moyen d'au moins un détecteur et que la position du dispositif d'alimentation de fil par rapport à la surface de la pièce usinée (5) est commandée automatiquement en fonction de la force de pression mesurée.

3. Méthode selon la revendication 1 ou 2,
**caractérisé en ce que** le guidage en friction de la pointe du fil (4) le long de la surface de la pièce usinée (5) est assuré par la force de gravitation, un ressort, une propulsion pneumatique ou hydraulique ayant une certaine pression, un moteur électrique ayant un certain couple de rotation ou par des détecteurs et des acteurs dirigés de manière régulée par ces derniers.

4. Méthode selon l'une quelconque des revendications 1 à 3,
**caractérisé en ce que** on utilise comme dispositif d'alimentation de fil un dispositif d'alimentation de fil mobile par rapport au rayon énergétique (1) et que le fil (2) est guidé automatiquement au moyen du dispositif d'alimentation de fil.

5. Méthode selon l'une quelconque des revendications 1 à 4,
**caractérisé en ce que** la distance entre le dispositif de focalisation du rayon énergétique (1) et la surface de la pièce usinée (5) est enregistrée et que le processus d'assemblage se termine en cas de dépassement ou de sous-dépassement d'une distance prescriptible.

6. Méthode selon l'une quelconque des revendications 1 à 5,
**caractérisé en ce que** la force de pression de la pointe du fil (4) est comparée à une force de pression de consigne et que le processus d'assemblage se termine en cas de dépassement ou de sous-dépassement d'une force de pression de consigne.

7. Méthode selon l'une quelconque des revendications 1 à 6, dans lequel, pour guider le rayon énergétique et le fil par rapport aux éléments de pièce usinée, on utilise une machine de guidage contrôlée par programme,
**caractérisé en ce qu'**avant l'assemblage, la pointe du fil est positionnée en friction successivement à plusieurs endroits du joint d'assemblage défini par les éléments de pièce usinée, que les données de position respectives de la pointe du fil sont enregistrées et qu'en se basant sur les données de position, la machine de guidage est programmée dans une position favorable par rapport aux éléments de pièce usinée.

8. Méthode selon l'une quelconque des revendications 1 à 7,
**caractérisé en ce que** la force de pression de la pointe du fil (4) est mesurée à l'aide d'au moins un détecteur et comparée à au moins une valeur prescriptible et que la pointe du fil est utilisée pour chercher un joint d'assemblage défini par les éléments de pièce usinée, à partir d'une position définie, au moyen d'un indicateur de position analogique ou numérique, commence un mouvement de recherche contrôlé et qu'il s'achève lors de l'atteinte d'une force théorique prescriptible.

9. Dispositif pour assembler d'éléments de pièce usinée au moyen d'un rayon énergétique, notamment d'un rayon laser, en utilisant un métal d'apport sous forme d'un fil (2), comportant un dispositif d'alimentation du fil qui est installé de manière mobile en direction de l'axe du rayon énergétique et une machine de guidage,
**caractérisé en ce que** la pointe du fil (4) fondant sous le rayon énergétique (1) est guidée en friction comme élément de palpage mécanique le long de la surface de la pièce usinée (5), le guidage en friction de la pointe du fil (4) le long de la surface de la pièce usinée (5) est assuré par la force de gravitation, un ressort, une propulsion électrique, hydraulique ou pneumatique ou par des détecteurs et des acteurs dirigés de manière régulée par ces derniers, et que
a) sur une voie d'avance de la machine de guidage, le dispositif d'alimentation de fil est mobile par rapport à un dispositif de focalisation du rayon énergétique (1) qui, pour guider le foyer de rayon énergétique en direction de l'axe du rayon énergétique, se déplace automatiquement avec le dispositif d'alimentation de fil, le point de référence pour le guidage du foyer de rayon énergétique se trouve sur le bord du bain de fusion, ou
b) sur une voie d'avance de la machine de guidage, le dispositif de focalisation du rayon énergétique et le dispositif d'alimentation de fil peuvent se déplacer linéairement et/ou tourner de manière à ce que la pointe du fil (4) soit guidée en tant qu'élément de palpage mécanique en friction le long d'une surface de guidage latérale d'un joint d'assemblage défini par les éléments de pièce usinée (7, 8 ; 9, 10) à assembler, le mouvement du dispositif de focalisation du rayon énergétique est couplé fixement au mouvement du dispositif d'alimentation de fil.

10. Dispositif selon la revendication 9,
**caractérisé en ce que** le dispositif d'alimentation de fil comporte un dispositif de mesure et de réglage qui enregistre la force de pression du fil (2) et la compare à une force de consigne prescriptible et guide en friction la pointe du fil (4) fondant sous le rayon énergétique (1) en fonction de la différence entre la force de pression enregistrée et la force de consigne le long de la surface de la pièce usinée (5).

11. Dispositif selon la revendication 9 ou 10,
**caractérisé en ce que** le rayon énergétique est un rayon laser et que, dans la trajectoire des rayons du rayon laser (1), est disposée une optique qui permet un déplacement linéaire et/ou une déviation en angle du rayon énergétique (1).

12. Dispositif selon l'une quelconque des revendications 9 à 11, **caractérisé en ce que** le rayon énergétique est un rayon laser et que, dans la trajectoire des rayons du rayon laser (1), est disposé au moins un miroir déviateur installé de manière mobile et/ou au moins un prisme déviateur installé de manière mobile.

13. Dispositif selon l'une quelconque des revendications 9 à 12, **caractérisé en ce que** le dispositif de focalisation du rayon énergétique et le dispositif d'alimentation de fil sont supportés par une machine de guidage contrôlée par programme, des indicateurs de position analogiques ou numériques étant associés au moins au dispositif d'alimentation de fil.
